(19) Europäisches Patentamt
European Patent Office
Office européen des brevets

(11) **EP 2 378 383 B1**

(12) **EUROPÄISCHE PATENTSCHRIFT**

(45) Veröffentlichungstag und Bekanntmachung des Hinweises auf die Patenterteilung:
**25.10.2023 Patentblatt 2023/43**

(21) Anmeldenummer: **11158091.6**

(22) Anmeldetag: **14.03.2011**

(51) Internationale Patentklassifikation (IPC):
**G05D 1/02** (2020.01)   **B66F 9/06** (2006.01)

(52) Gemeinsame Patentklassifikation (CPC):
**G05D 1/0217; B66F 9/063; G05D 1/0223;**
G05D 1/024; G05D 1/0272; G05D 1/0274;
G05D 2201/0216

(54) **Verfahren zum Betreiben eines holonomen/omnidirektionalen Flurförderfahrzeugs**

Method for operating a holonomic/omnidirectional industrial truck

Procédé de fonctionnement d'un chariot de manutention holonomène / omnidirectionnel

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.03.2010 DE 102010012750**

(43) Veröffentlichungstag der Anmeldung:
**19.10.2011 Patentblatt 2011/42**

(73) Patentinhaber: **KUKA Deutschland GmbH 86165 Augsburg (DE)**

(72) Erfinder:
• **Pfaff, Patrick 86163 Augsburg (DE)**
• **Sprunk, Christoph 79283 Bollschweil (DE)**

(74) Vertreter: **Böss, Dieter Alexander et al Schirmgasse 268 84028 Landshut (DE)**

(56) Entgegenhaltungen:
**EP-A1- 0 346 538**

• LAU, B., SPUNK, C., BURGARD W: "Kinodynamic motion planning for mobile using splines", INTELLIGENT ROBOTS AND SYSTEMS.IROS 2009.IEEE/RSJ INTERNATIONAL CONFERENCE ON PUBLICATION YEAR , 11. Oktober 2009 (2009-10-11), 15. Oktober 2009 (2009-10-15), Seiten 2427-2433, XP002775170, DOI: 10.1109/IROS.2009.5354805 ISBN: 978-1-4244-3804-4 Gefunden im Internet: URL:http://ieeexplore.ieee.org/document/53 54805/ [gefunden am 2017-10-30]
• PAROMTCHIK I E, REMBOLD U: "A practical approach to motion generation and control for an omnidirectional mobile robot.", ROBOTICS AND AUTOMATION, PROCEEDINGS. 1994 IEEE INTERNATIONAL CONFERENCE ON , 8. Mai 1994 (1994-05-08), 13. Mai 1994 (1994-05-13), Seiten 2790-2795, XP010097334, DOI: 10.1109/ROBOT.1994.350916 Gefunden im Internet: URL:http://ieeexplore.ieee.org/document/35 0916/ [gefunden am 2017-10-30]

## Beschreibung

Die Erfindung betrifft ein Verfahren zum Betreiben eines holonomen / omnidirektionalen Flurförderfahrzeugs.

Unter einem holonomen Flurförderfahrzeug versteht man ein Fahrzeug, das sich omnidirektional bewegen kann, also nicht nur längs seiner Orientierung, sondern auch in einem beliebigen Winkel zu seiner Orientierung. D.h. ein holonomes Flurförderfahrzeug kann beliebige Translationen und Rotationen überlagert ausführen. Konventionelle holonome Flurförderfahrzeuge umfassen lediglich Steuervorrichtungen, die eingerichtet sind, das Flurförderfahrzeug entweder auf einer optischen oder induktiven Spur zu halten oder es zu ermöglichen, die Flurförderfahrzeuge geschwindigkeits- oder positionsgeregelt zu verfahren. Dabei werden kinematische Gesichtspunkte wie beispielsweise die Masse des Flurförderfahrzeugs oder Brems- und Beschleunigungswege außer acht gelassen. Dies kann dazu führen, dass es aufgrund zu hoher Geschwindigkeiten dem Flurförderfahrzeug nicht möglich ist, einen geplanten Pfad abzufahren. Andererseits kann es sein, dass die Erfüllbarkeit aller Pfade nur dadurch erreicht werden kann, dass die maximale Geschwindigkeit des konventionellen Flurförderfahrzeugs deutlich unterhalb des physikalisch Möglichen gewählt wird. Somit benötigt das konventionelle Flurförderfahrzeug für seine Bewegung deutlich mehr Zeit, als dies physikalisch nötig wäre. Um die kinodynamischen Gesichtspunkte bei konventionellen holonomen Flurförderfahrzeugen weitestgehend ignorieren zu können, umfassen Pfade für konventionelle Flurförderfahrzeuge, ähnlich einem nicht-holonomen Flurförderfahrzeug, entweder Kreisbahnen, oder eine Drehung und eine Translation werden sogar getrennt ausgeführt. Somit weisen Pfade für ein konventionelles holonomen Flurförderfahrzeugs eine sequentielle Abfolge von Kreisbahnen, Translationen und Drehungen auf der Stelle auf.

Das Dokument LAU B., SPUNK C., ET AL. Kinodynamic Motion Planning for Mobile Robots Using Splines beschreibt ein Verfahren zur Planung der Bewegung eines mobilen Roboters in einer Umgebung mit Hindernissen. Um eine besonders geeignete Bahn zu finden entlang welcher der mobile Roboter sich bewegen soll, wird eine ursprüngliche Trajektorie in einen ursprünglichen Pfad und in ein ursprüngliches Geschwindigkeitsprofil aufgetrennt und unabhängig voneinander behandelt.

Die EP 0 346 538 A1 offenbart ein Verfahren zum Steuern eines fahrerlosen Fahrzeugs. Dabei werden alle Fahrbefehle, welche die Stützpunkte des abzufahrenden Pfades repräsentieren, eingelesen und dann ein Geschwindigkeitsprofil entsprechend einer vorgegebenen Bewegungsfunktion erstellt.

Das Dokument PAROMTCHIK, I.E., REMBOLD, U. A Practical Approach to Motion Generation and Control for an Omnidirectional Mobile Robot beschreibt ein Verfahren zur Erzeugung einer Bahnkurve aus einem Pfad, der von einer Pfadplanung vorgegeben ist. Die Pfadplanung liefert dazu einen Startpunkt, einen Zielpunkt und Zwischenstützpunkte d.h. Knoten. Aufgrund dieser Punkte wird mittels einer Spline-Funktion dritter Ordnung die Bahnkurve erzeugt.

Aufgabe der Erfindung ist es, ein verbessertes Verfahren zum Betreiben eines holonomen Flurförderfahrzeugs anzugeben.

Die Aufgabe der Erfindung wird gelöst durch ein Verfahren nach Anspruch 1.

Ein weiterer Aspekt der Erfindung betrifft ein holonomens Flurförderfahrzeug, aufweisend einen Fahrzeuggrundkörper, mehrere Räder, die insbesondere als omnidirektionale Räder ausgebildet sind, Antriebe zum Bewegen der Räder und eine mit den Antrieben verbundene Steuervorrichtung, die eingerichtet ist, die Antriebe für eine Bewegung des Flurförderfahrzeug gemäß dem erfindungsgemäßen Verfahren anzusteuern.

Gemäß dem erfindungsgemäßen Verfahren wird ein holonomes Flurförderfahrzeug bewegt, also ein Fahrzeug, das sich omnidirektional bewegen kann, also nicht nur längs seiner Orientierung, sondern auch in einem Winkel zu seiner Orientierung. Erfindungsgemäß wird demnach zunächst der Pfad zwischen dem Start- und dem Endpunkt ermittelt und dieser mittels Splines modelliert. Anschließend wird dem Pfad das Geschwindigkeitsprofil zugeordnet, woraus die Bahnkurve entsteht. Diese wird anschließend iterativ mittels der Optimierungsvorschrift verbessert, wodurch die weitere Bahnkurve entsteht, auf der das holonome Flurförderfahrzeug sich bewegt.

Die Optimierungsvorschrift umfasst eine Neuberechnung des Geschwindigkeitsprofils. Für die Berechnung des Geschwindigkeitsprofils bzw. die Neuberechnung des Geschwindigkeitsprofils für die weitere Bahnkurve wird wenigstens eine der folgenden Randbedingungen berücksichtigt:

    a) maximal erlaubte translatorische und/oder rotatorische Geschwindigkeit des Flurförderfahrzeugs insbesondere unter Sicherheitsgesichtspunkten,

    b) eine maximale Geschwindigkeit, die Antriebe des Flurförderfahrzeugs erzielen können,

    c) eine maximale translatorische und rotatorische/zentripetale Beschleunigung, die eine mit dem Flurförderfahrzeug transportierte Last ausgesetzt werden kann,

    d) eine maximale Geschwindigkeit die von der Distanz zu Hindernissen abhängt, die in einer Karte abgespeichert sind oder durch Sensoren erkannt werden.

Somit kann sichergestellt werden, dass sich gegebenenfalls das Flurförderfahrzeug innerhalb von gegebenen Sicherheitsanforderungen bewegt. Es ist auch gegebenenfalls möglich, dass das Flurförderfahrzeug eine Last mit insbesondere der Last zugeordneter maximaler Geschwindigkeit vom Start- zum Endpunkt befördert.

Nach einer Variante des erfindungsgemäßen Verfahrens umfasst die Optimierungsvorschrift eine Veränderung der Form der weiteren Bahnkurve. Dadurch wird es beispielsweise ermöglicht, dass das Flurförderfahrzeug ein Hindernis umfahren kann oder aufgrund der veränderten Form schneller vom Start- zum Endpunkt fahren kann.

Die Optimierungsvorschrift kann auch eine Überprüfung einer Kollisionsfreiheit mit einem Hindernis umfassen, wodurch dieses gegebenenfalls umfahren werden kann.

Die Optimierungsvorschrift kann auch auf einer Kostenfunktion insbesondere der Zeit und/oder der für die Bewegung des Flurfahrzeugs aufzuwendenden Energie basieren.

Der mittels Splines modellierte Pfad kann mehrere Splinesegmente umfassen, die durch Stützpunkte verbunden sind.

Insbesondere für die Bahnkurve kann es vorgesehen sein, dass den Splinesegmenten jeweils eine Bewegung des Flurförderfahrzeugs ohne Orientierungsänderung und den Stützpunkten eine Orientierungsänderung des Flurförderfahrzeugs zugeordnet ist. Somit würde das Flurförderfahrzeug lediglich an den Stützpunkten seine Orientierung auf der Stelle ändern.

Nach einer bevorzugten Ausführungsform des erfindungsgemäßen Verfahrens wird in der Umgebung wenigstens einer der Stützpunkte während der Bewegung des Flurförderfahrzeugs eine Orientierungsänderung des Flurförderfahrzeugs durchgeführt. Dann ist es möglich, dass sich das Flurförderfahrzeug während der Bewegung entlang eines Splinesegments auch seine Orientierung ändert, also zumindest eine Teildrehung durchführt. Dadurch ist es nicht mehr nötig, an der Stützstelle zu halten, um eine Umorientierung des Flurförderfahrzeugs durchzuführen.

Für die Orientierungsänderung des Flurförderfahrzeugs kann vorzugsweise ein Drehungs-Startpunkt auf dem dem relevanten Stürzpunkt vorhergehenden Splinesegment und ein Drehungs-Endpunkt auf dem dem relevanten Stürzpunkt vorhergehenden Splinesegment festgelegt werden.

Die Orientierungsänderung kann insbesondere gleichmäßig in der Umgebung des relevanten Stützpunktes durchgeführt werden. Gegebenenfalls beginnt demnach während der Fahrt des Flurförderfahrzeugs dessen Umorientierung am Drehungs-Startpunkt und wird fortlaufend bis zum Drehungs-Endpunkt durchgeführt.

Somit stellt gegebenenfalls die Erfindung eine kinodynamische Bewegungsplanung für holonome Flurförderfahrzeuge bereit.

Gegebenenfalls wird die erfindungsgemäße kontinuierliche Trajektorienoptimierung (Ermitteln der weiteren Bahnkurve basierend auf der Optimierungsvorschrift) durch eine neuartige Modellierung ermöglicht. Diese kann beispielsweise Drehungen auf die Umgebungen der Stürzpunkte, und denen sich das Flurförderfahrzeug auf der Stelle dreht, zwischen einem sogenannten genannten "entry point" (Drehungs-Starpunkt) und einem ″exit point″ (Drehungs-Endpunkt) verteilen.

Existieren z.B. dynamische Hindernisse während der Bewegung des Flurförderfahrzeugs, dann können diese dynamischen Hindernisse durch wiederholte Neuausführung des Planungsprozesses (Ermitteln der weiteren Bahnkurve, gegebenenfalls auch des Pfads, der Bahnkurve und/oder des Geschwindigkeitsprofils) mit aktualisierter Umgebungswahrnehmung behandelt werden. Für den neuen Planungsprozess kann z.B. Folgendes vorgesehen sein:

1. Festlegen einer Planungszeit (hängt von der Geschwindigkeit des verwendeten Rechners bzw. der verwendeten Steuervorrichtung ab),

2. Vorhersage des Systemzustands zu diesem zukünftigen Zeitpunkt durch aktuell geplante Trajektorie (Bahnkurve bzw. weitere Bahnkurve) und Lokalisierungsdaten (Position, Orientierung, Geschwindigkeiten),

3. Planen einer neuen Trajektorie (weitere Bahnkurve) von diesem vorhergesagten Zustand aus, kontinuierlich in Position, Orientierung, Krümmung und Geschwindigkeiten.

Ein Ausführungsbeispiel der Erfindung ist exemplarisch in den beigefügten schematischen Figuren dargestellt. Es zeigen:

Fig. 1      eine Draufsicht eines holonomen Flurförderfahrzeugs in schematischer Darstellung,

Fig. 2      ein Flussdiagramm zum Veranschaulichen einer Planung einer Bahnkurve für das Flurförderfahrzeug,

Fig. 3      ein geplanter Pfad für das Flurförderfahrzeug,

Figuren 4, 5      geplante Änderungen der Orientierung des Flurförderfahrzeugs entlang des Pfades,

Fig. 6      eine weitere geplante Änderung der Orientierung des Flurförderfahrzeugs entlang des Pfades und

Fig. 7      eine grafische Darstellung der Änderung der in der Orientierung des Flurförderfahrzeugs.

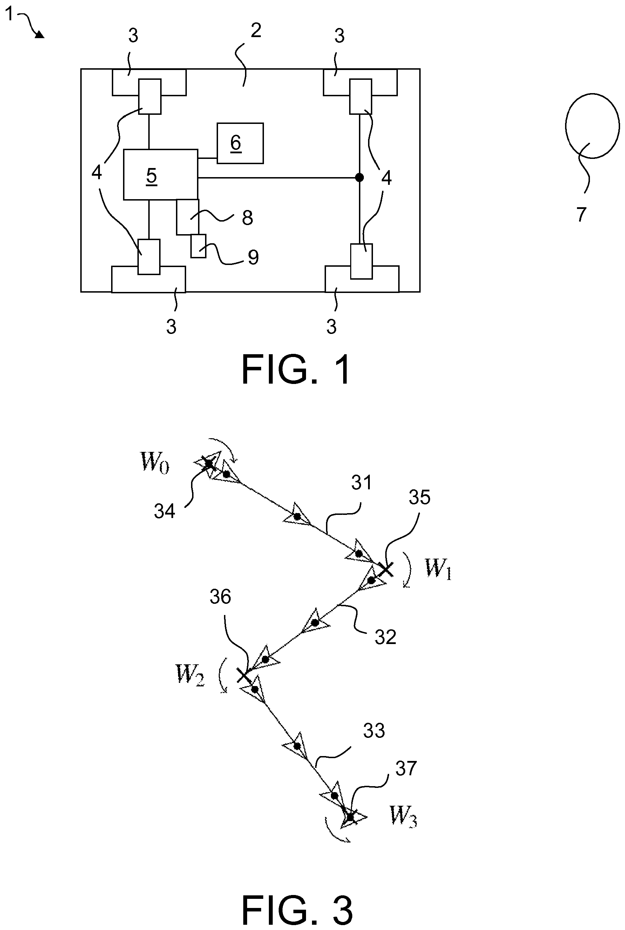

Die Fig. 1 zeigt in einer Draufsicht schematisch ein autonomes Flurförderfahrzeug, das insbesondere als ein holonomes Flurförderfahrzeug 1 ausgebildet ist. Da das Flurförderfahrzeug ein holonomes Flurförderfahrzeug 1 ist, kann es sich in alle Richtungen frei bewegen; es handelt sich demnach bei dem Flurförderfahrzeug 1 um ein omnidirektionales Fahrzeug.

Im Falle des vorliegenden Ausführungsbeispiels weist das Flurförderfahrzeug 1 einen Fahrzeuggrundkörper 2 und vier omnidirektionale Räder 3 auf, die auch als Mecanum-Räder bezeichnet werden. Solche Räder umfassen beispielsweise eine drehbar gelagerte Felge, an der mehrere Rollkörper antriebslos gelagert sind. Die Felge kann mit einem Antrieb angetrieben werden. Im Falle des vorliegenden Ausführungsbeispiels werden die Räder 3 mit jeweils einem elektrischen Antrieb 4 angetrieben.

Das Flurförderfahrzeug 1 weist ferner eine am Fahrzeuggrundkörper 2 angeordnete Steuervorrichtung 5 auf, die mit den Antrieben 4 verbunden ist. Auf der Steuervorrichtung 5 läuft ein Rechenprogramm, das die Antrieb 4 derart ansteuert, dass diese sich bewegen, damit sich das Flurförderfahrzeug 1 mit einer vorbestimmten Geschwindigkeit und einer vorbestimmten Bewegungsrichtung bewegt.

Das Flurförderfahrzeug 1 umfasst ferner eine mit der Steuervorrichtung 5 verbundene und z.B. am Fahrzeuggrundkörper 2 angeordnete Abstandsmessvorrichtung 6. Die Abstandsmessvorrichtung 6 umfasst z.B. Laserscanner und ist vorgesehen, ein Hindernis 7 zu erkennen, sodass gegebenenfalls die Steuervorrichtung 5 bzw. ein auf der Steuervorrichtung 5 laufendes Rechnerprogramm eine Entfernung zum Hindernis 7 berechnen kann, damit das Flurförderfahrzeug 1 das Hindernis 7 umfährt.

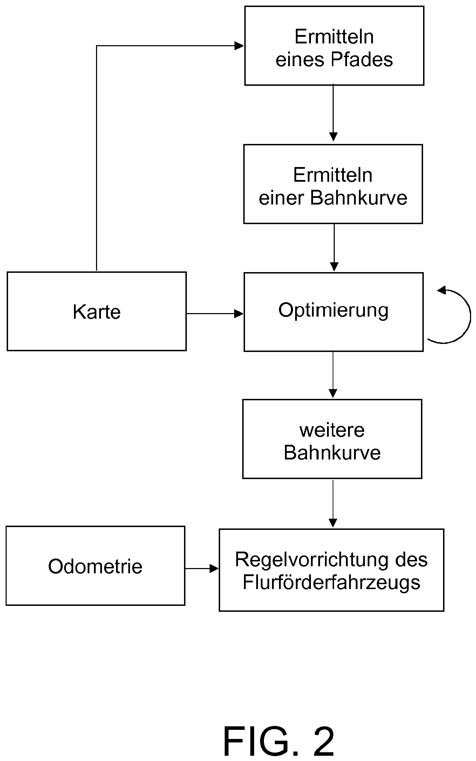

Im Falle des vorliegenden Ausführungsbeispiels ist das in der Steuervorrichtung 5 gespeicherte Rechnerprogramm derart ausgeführt, dass es eine Bahnplanung durchführt, auf deren zugeordneter Bahn das Flurförderfahrzeug 1 sich bewegt. Für die Bahnplanung berechnet die Steuervorrichtung 5 mittels des Rechnerprogramms zunächst einen Pfad, auf der sich das Flurförderfahrzeug 1 bewegen soll. Basierend auf dem Pfad modelliert anschließend die Steuervorrichtung 5 den Pfad mittels Splines, insbesondere mittels Bezier Splines und berechnet ein Geschwindigkeitsprofil für diese Bahn, woraus eine Bahnkurve (Trajektorie) entsteht. Darauf aufbauend wird die Bahnkurve rechnerisch aufgrund von Randbedingungen fortlaufend verbessert, insbesondere bzgl. einer Kostenfunktion optimiert, woraus eine weitere Bahnkurve (weitere Trajektorie) entsteht, auf der anschließend das Flurförderfahrzeug 1 sich bewegt. Die Bewegung des Flurförderfahrzeugs 1 wird z.B. mittels einer Regelvorrichtung 8 gesteuert, die z.B. mit einem Hodometer (englisch: Odometer) 9 verbunden ist, der messtechnisch die zurückgelegte Wegstrecke des Flurfahrzeugs 1 ermittelt. Diese Planung, die auch auf einer Karte der Umgebung der Bahnkurve basiert, ist in der Fig. 2 zusammengefasst. Im Folgenden wird die Berechnung der weiteren Bahnkurve detaillierter beschrieben:

Eine Bahnkurve (Trajektorie) $Q(u(t))$ spezifiziert eine Pose (Position und Orientierung) des Flurförderfahrzeugs 1 für jeden Zeitpunkt t, sowie dessen Ableitung, also die entsprechend Geschwindigkeit v, mit der sich das Flurförderfahrzeug 1 entlang der Bahnkurve bewegen soll. Die Bahnkurve umfasst einen Pfad $Q(u) = <x, y, \theta>$, der die Pose des entlang des Pfades sich bewegenden Flurförderfahrzeugs 1 als Funktion eines nativen Parameters $u \in [0,1]$ beschreibt. Diesem Pfad ist eine Abbildung der Zeit auf den internen Pfadparameter u zugeordnet, die einen oder mehrere Randbedingungen berücksichtigt und das zulässige Geschwindigkeitsprofil des Flurfahrzeugs 1 für den Pfad aufweist.

Im Falle des vorliegenden Ausführungsbeispiels wird der Pfad mittels Splines, insbesondere mittels Bezier Splines, vorzugsweise mit Bezier Splines fünfter Ordnung beschrieben. Im Falle des vorliegenden Ausführungsbeispiels wird auch die Orientierung des Flurförderfahrzeugs 1 berücksichtigt.

Bezier Splines umfassen polynomische Segmente, die stetig differenzierbar aneinander gefügt sind. In dem Fall eines Splines fünfter Ordnung ist das i-te Pfadsegment des Splines vollständig durch seinen Startpunkt $W_i$ und seinen Endpunkt $W_{i+1}$ zusammen mit den ersten Ableitungen $T_i$, $T_{i+1}$ und den zweiten Abgleitungen $A_i$, $A_{i+1}$ dieser beiden Punkte bestimmt. Die Polynome und demnach alle Start- und Endpunkte des Spline-Segmente sind dreidimensional bezüglich der Pose des Flurfahrzeugs 1, ausgedrückt in dessen Koordinaten $<x, y, \theta>$. Die Punkte werden beispielsweise als reellwertige Vektoren beschrieben. Wegen ihrer Periodizität wird die Orientierung $\theta$ mittels modolo 2n beschrieben. Gegebenenfalls wird $2k\pi, k \in Z$ zum Orientierungswert $\theta$ addiert, um die kürzeste Drehdifferenz zwischen zwei Spline-Eckpunkten für eine Interpolation zu erhalten.

Im Falle des vorliegenden Ausführungsbeispiels wird der Pfad durch bestimmte Parametern repräsentiert, die eine relativ effektive Optimierung und Glättung des Pfades erlauben. Insbesondere werden die Positionskomponenten der Start- und gegebenenfalls der Endpunkte und/oder die Größe der Orientierungskomponente der ersten Ableitung mittels eines Dehnungsfaktors $e_i$ einer Optimierung unterzogen.

Im Falle des vorliegenden Ausführungsbeispiels umfasst der ermittelte Pfad, der in der Fig. 3 gezeigt ist, Pfadsegmente 31, 32, 33 gerader Bewegungen mit anschließenden Drehungen auf den Stellen 34-37, entsprechen $W_i$. Würde sich das Flurfahrzeug 1 entsprechend des Pfades bewegen, so würde seine Orientierung $\theta_{i,i+1}$ entlang eines Pfadsegments 31-33 mit dem Startpunkt $W_i$ und dem Endpunk $W_{i+1}$ zunächst initialisiert werden als $\theta^0_{i,i+1}$. Diese Initialisierung kann z.B. mittels einer Standardtechnik durchgeführt werden, wie sie dem Fachmann im Prinzip bekannt ist.

Für einen Pfad mit z.B. N Pfadsegmenten 31,

32, 33 und $W_i$ $i \in [0,...,N]$ Punkten bzw. Stellen 34-37, ergibt sich beispielsweise die minimale Drehänderung durch Interpolation zwischen der Startorientierung $W_{0,\theta}$ am Startpunkt und der Endorientierung $W_{N,\theta}$ am Endpunkt des Pfades durch die Gleichung

$$\theta^1_{k,k+1} = W_{0,\theta} + s_k (W_{N,\theta} - W_{0,\theta}) ,$$

wobei $s_k \in [0,1]$ insbesondere berechnet wird gemäß

$$s_k = \frac{\frac{1}{2}\left\|W_{k+1} - W_k\right\| + \sum_{i=1}^{k}\left\|W_i - W_{i-1}\right\|}{\sum_{i=1}^{N}\left\|W_i - W_{i-1}\right\|} .$$

Bei der Berechnung von $W_{N,\theta} - W_{0,\theta}$ ist auf Zyklizität zu achten und darauf, dass diejenige Drehrichtung gewählt wird, die die nötige Drehung minimiert. Die Orientierungen des Flurförderfahrzeugs 1 am Startpunkt und am Endpunkt des entsprechenden Pfandsegments sind normalerweise gegeben. An den Zwischenstellen kann die Orientierung aufgrund der benachbarten geraden Pfadsegmente ebenfalls festgelegt werden.

Im Falle des vorliegenden Ausführungsbeispiels wird der Pfad an den Stellen 35, 36 in mehrere Unterpfade aufgespaltet und die Orientierung des Flurförderfahrzeugs 1 individuell optimiert. Für jeden Unterpfad wird ein Parameter $\lambda_\theta \in [0,1]$ verwendet, der die Orientierung zwischen zwei Orientierungen gemäß folgender Bedingung verschleift:

$$\theta_{k,k+1} = (1 - \lambda_\theta) \cdot \theta^0_{k,k+1} + \lambda_\theta \cdot \theta^1_{k,k+1}$$

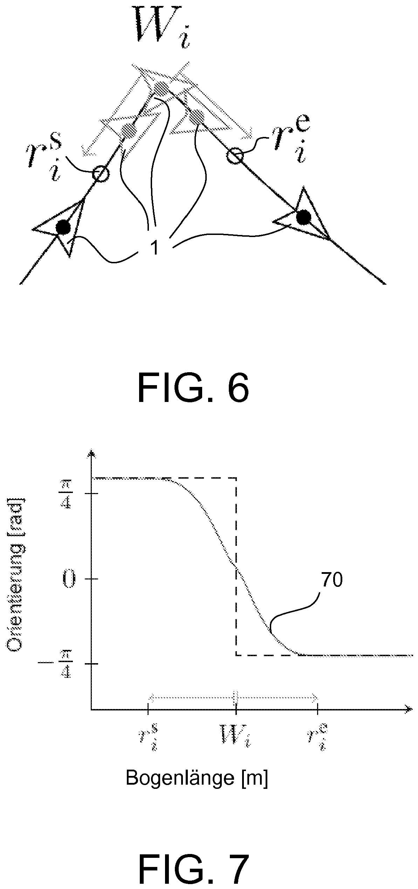

Damit das Flurförderfahrzeug 1 im Falle des vorliegenden Ausführungsbeispiels seine Orientierung nicht nur an den Stellen 34-37 ändert, sondern seine Orientierung z.B. ständig ändert, wird um jede Stelle 34-37 ein Drehungs-Punkt $r^s_i$ am Ende eines vorhergehenden Pfadsegments 31-33 und ein Drehungs-Punkt $r^e_i$ am Anfang des nachfolgenden Pfadsegments 31-33 verwendet, um den Beginn und das Ende einer Drehung (Änderung der Orientierung) zu spezifizieren. Somit wird die Drehung von $\theta_{i-1,i}$ nach $\theta_{i,i+1}$ gleichmäßig zwischen $r^s_i$ und $r^e_i$ vollzogen. Dies ist in der Fig. 6 veranschaulicht. Die Änderung 70 der Orientierung zwischen $r^s_i$ und $r^e_i$ ist beispielhaft mittels einer in der Fig. 7 dargestellten Grafik veranschaulicht.

Im Falle des vorliegenden Ausführungsbeispiels werden die Drehungs-Punkte realisiert, indem die Splines an diesen Punkten unterteilt werden und anschließend die Orientierungskomponenten an den Punkten 34-37 interpoliert werden gemäß der Vorschrift:

$$W_{i,\theta} = \frac{1}{2} \cdot (r^s_i + r^e_i) .$$

Demnach ist die Orientierungskomponente der entsprechenden ersten Ableitung

$$T_{i,\theta} = e_\theta \cdot \frac{1}{2} \cdot (\theta_{i,i+1} - \theta_{i,i-1}) ,$$

wobei $e_\theta$ ein Skalierungsfaktor für die Optimierung ist. Der Startpunkt des Pfades wird für diesen Parameter nicht verändert. Das Unterteilen der Segmente verändert die Form des Pfades in der Ebene nicht, lediglich die Orientierungskomponente wird hiervon beeinflusst.

Des Weiteren wird im Falle des vorliegenden Ausführungsbeispiels ein Geschwindigkeitsprofil ermittelt, mit dem das Flurförderfahrzeug 1 sich entlang des Pfades bewegen soll, wodurch aus dem Pfad $Q(u)$ die Bahnkurve $Q(u(t))$ entsteht. Im Falle des vorliegenden Ausführungsbeispiels wird das Geschwindigkeitsprofil derart gewählt, sodass das Flurförderfahrzeug 1 mit der höchst möglichen Geschwindigkeit entlang des Pfades sich bewegen kann in Hinblick auf gewisse dynamische Randbedingungen.

Die Bahnkurve $Q((u(t)) = \hat{Q}(t)$ definiert die Geschwindigkeit durch ihre erste Ableitung nach der Zeit, die folgendermaßen ermittelt werden kann

$$\frac{d}{dt}\hat{Q}(t) = Q'(u(t)) \cdot \frac{d}{dt}u(t)$$

wobei "''" für die Ableitung nach u steht.

Im Falle des vorliegenden Ausführungsbeispiels werden diskrete Stützpunkte bezüglich u, d.h. entlang des Pfades definiert. Im Falle des vorliegenden Ausführungsbeispiels wird ein neuer Stützpunkt definiert, wenn das Flurfahrzeug 1 potenziell mehr als 2cm fährt oder sich um mehr als 0,02 rad dreht.

Für diese Stützpunkte wird im Falle des vorliegenden Ausführungsbeispiels die maximal erlaubten

$$\frac{d}{dt}u(t)$$

berechnet, die beispielsweise folgende Randbedingungen erfüllen:

a) maximal erlaubte translatorische und/oder rotatorische Geschwindigkeit insbesondere unter Sicherheitsgesichtspunkten,

b) eine maximale Geschwindigkeit, die die Antriebe 4 des Flurförderfahrzeugs 1 erzielen können,

c) eine maximale zentripetale Beschleunigung, die eine mit dem Flurförderfahrzeug 1 transportierte Last ausgesetzt werden kann.

Im Falle der vorliegenden Erfindung wird die ermittelte Bahnkurve verbessert, insbesondere einer fortlaufenden Optimierung unterzogen, woraus eine weitere Bahnkurve $Q_w(u(t))$ entsteht, entlang derer das Flurförderfahrzeug 1 bewegt wird. Die Optimierung startet mit der Bahnkurve $Q(u(t))$, die insbesondere auf dem Pfad mit den geraden Pfadsegmenten 31-33 basiert.

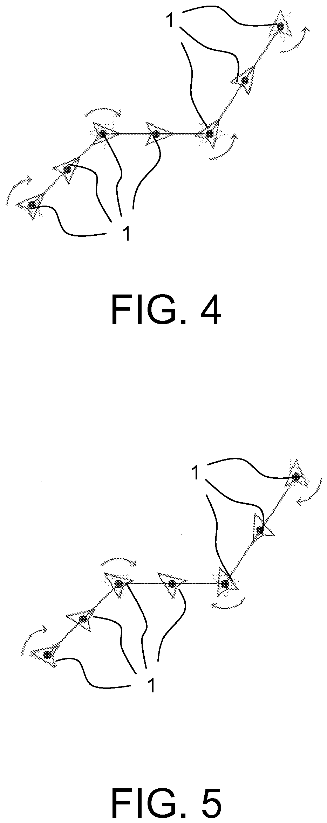

Um relativ starke Drehungen des Pfades zu modellieren, kann ein relativ kleiner Dehnungsfaktors e von beispielsweise 0,5 und der Skalierungsfaktor $e_\theta$ für die Optimierung gleich 1,0 gesetzt werden. Für das Orientierungsverhalten kann zunächst der Parameter $\lambda_0$ gleich Null gesetzt werden, um die Orientierung auf den Pfadsegmenten 31-33 beizubehalten und die Drehungs-Punkte können auf die Stellen 34-37 gesetzt werden, um eine Umorientierung (Drehung) des Flurförderfahrzeugs 1 auf diese Stellen zu beschränken, wie dies z.B. in der Fig. 4 veranschaulicht ist. Die Fig. 5 zeigt das Drehungsverhalten des Flurförderfahrzeugs 1 entlang des Pfades für einen Parameter $\lambda_\theta$ gleich 1,0.

Anschließend wird die weitere Bahnkurve iterativ mittels der oben beschriebenen Optimierung erstellt, wobei im Falle des vorliegenden Ausführungsbeispiels auch berücksichtigt wird, dass die berechnete weitere Bahnkurve von dem Flurförderfahrzeug 1 ohne einem Zusammenstoßen mit dem Hindernis 7 durchfahren werden kann. Eine Information über das Hindernis 7 ist z.B. in einer in der Steuervorrichtung 5 gespeicherten Karte der Umgebung enthalten.

## Patentansprüche

1. Verfahren zum Betreiben eines holonomen / omnidirektionalen Flurförderfahrzeugs, aufweisend folgende Verfahrensschritte:

- Ermitteln eines Pfades für die Bewegung des Flurförderfahrzeugs (1) von einem Startpunkt (34) zu einem Endpunkt (37),
- Modellieren des ermittelten Pfades mittels Splines, insbesondere mittels Bezier-Splines, vorzugsweise mittels Bezier-Splines fünfter Ordnung,
- basierend auf dem modellierten Pfad, Ermitteln einer Bahnkurve für die Bewegung des Flurförderfahrzeugs (1) entlang des Pfades mit einem ermittelten Geschwindigkeitsprofil,
- Ermitteln einer weiteren Bahnkurve, auf der sich das Flurförderfahrzeug vom Startpunkt (34) zum Endpunkt (37) bewegen soll, basierend auf der Bahnkurve und einer iterativen Optimierungsvorschrift, die eine Neuberechnung des Geschwindigkeitsprofils umfasst, wobei für die Berechnung des Geschwindigkeitsprofils die folgenden Randbedingungen berücksichtigt werden:

a) maximal erlaubte translatorische und rotatorische Geschwindigkeit des Flurförderfahrzeugs (1) unter Sicherheitsgesichtspunkten,
b) eine maximale Geschwindigkeit, die Antriebe (4) des Flurförderfahrzeugs (1) erzielen können,
c) eine maximale zentripetale Beschleunigung, der eine mit dem Flurförderfahrzeug (1) transportierte Last ausgesetzt werden kann, und

- Bewegen des Flurförderfahrzeugs (1) entlang der weiteren Bahnkurve insbesondere mittels einer Regelvorrichtung (8) des Flurförderfahrzeugs (1), wobei der mittels Splines modellierte Pfad mehrere Spline-Segmente (31-33) umfasst, die durch Stützpunkte (35, 36) verbunden sind, in der Umgebung wenigstens einer der Stützpunkte (35, 36) während der Bewegung des Flurförderfahrzeugs (1) eine Orientierungsänderung des Flurförderfahrzeugs (1) durchgeführt wird **dadurch gekennzeichnet dass** für die Orientierungsänderung des Flurförderfahrzeugs (1) ein Drehungs-Startpunkt ($r^s_i$) auf einem dem relevanten Stützpunkt vorhergehenden Spline-Segment und ein Drehungs-Endpunkt ($r^e_i$) auf einem dem relevanten Stützpunkt nachfolgenden Spline-Segment festgelegt wird.

2. Verfahren nach Anspruch 1, bei dem die Optimierungsvorschrift eine Veränderung der Form der weiteren Bahnkurve und/oder eine Überprüfung einer Kollisionsfreiheit mit einem Hindernis (7) umfasst, und/oder auf einer Kostenfunktion, insbesondere der Zeit und/oder der für die Bewegung des Flurfahrzeugs (1) aufzuwendenden Energie, basiert.

3. Verfahren nach Anspruch 1 oder 2, bei dem den SplineSegmenten jeweils eine Bewegung des Flurförderfahrzeugs (1) ohne Orientierungsänderung und den Stützpunkten eine Orientierungsänderung des Flurförderfahrzeugs (1) zugeordnet ist.

4. Verfahren nach Anspruch 1 oder 2, bei dem die Orientierungsänderung gleichmäßig durchgeführt wird.

5. Holonomes Flurförderfahrzeug, aufweisend einen FahrzeugGrundkörper (2), mehrere Räder (3), die insbesondere als omnidirektionale Räder ausgebildet sind, Antriebe (4) zum Bewegen der Räder (3) und eine mit den Antrieben (4) verbundene Steuervorrichtung (5), die eingerichtet ist, die Antriebe (4) für eine Bewegung des Flurförderfahrzeugs (1) gemäß dem Verfahren nach einem der Ansprüche 1 bis 4 zu betreiben.

**Claims**

1. Method for operating a holonomic/omnidirectional industrial truck, comprising the following method steps:

    - determining a path for the movement of the industrial truck (1) from a starting point (34) to an end point (37),
    - modeling of the determined path by means of splines, in particular by means of Bezier splines, preferably by means of fifth-order Bezier splines,
    - based on the modeled path, determining a path curve for the movement of the industrial truck (1) along the path with a determined speed profile,
    - determining a further path curve on which the industrial truck (1) is to move from the starting point (34) to the end point (37), based on the path curve and an iterative optimization rule comprising a recalculation of the speed profile, wherein the following constraints are taken into account for the calculation of the speed profile:

        a) maximum permitted translational and rotational speed of the industrial truck (1) from a safety point of view,
        b) a maximum speed that drives (4) of the industrial truck (1) can achieve,
        c) a maximum centripetal acceleration to which a load transported by the industrial truck (1) can be subjected, and

    - moving the industrial truck (1) along the further path curve, in particular by means of a control device (8) of the industrial truck (1), the path modeled by means of splines comprising a plurality of spline segments (31-33) which are connected by support points (35, 36), in the vicinity of at least one of the support points (35, 36) a change in orientation of the industrial truck (1) being carried out during the movement of the industrial truck (1), **characterized in that**, for the change in orientation of the industrial truck (1), a rotation start point ($r^s_i$) is defined on a spline segment preceding the relevant support point and a rotation end point ($r^e_i$) is defined on a spline segment following the relevant support point.

2. Method according to claim 1, in which the optimization rule comprises a change in the shape of the further trajectory curve and/or a check of collision-freeness with an obstacle (7), and/or is based on a cost function, in particular the time and/or the energy to be expended for the movement of the industrial truck (1).

3. Method according to claim 1 or 2, in which to the spline segments are each assigned a movement of the industrial truck (1) without a change in orientation and to the support points are each assigned a change in orientation of the industrial truck (1).

4. Method according to claim 1 or 2, in which the change of orientation is carried out uniformly.

5. A holonomic industrial truck comprising a truck body (2), a plurality of wheels (3), in particular designed as omnidirectional wheels, drives (4) for moving the wheels (3), and a control device (5) connected to the drives (4) and adapted to operate the drives (4) for moving the industrial truck (1) according to the method of any one of claims 1 to 4.

**Revendications**

1. Procédé pour faire fonctionner un chariot de manutention holonome / omnidirectionnel, présentant les étapes de procédé suivantes :

    - détermination d'un chemin pour le déplacement du chariot de manutention (1) depuis un point de départ (34) jusqu'à un point final (37),
    - modélisation du chemin déterminé au moyen de splines, en particulier au moyen de splines de Bézier, de préférence au moyen de splines de Bézier du cinquième ordre,
    - sur la base du chemin modélisé, détermination d'une courbe de trajectoire pour le mouvement du chariot de manutention (1) le long du chemin avec un profil de vitesse déterminé,
    - détermination d'une autre courbe de trajectoire sur laquelle le chariot doit se déplacer depuis le point de départ (34) jusqu'au point final (37), sur la base de la courbe de trajectoire et d'une règle d'optimisation itérative, qui comprend un nouveau calcul du profil de vitesse, les conditions limites suivantes étant prises en compte pour le calcul du profil de vitesse :

        a) vitesse maximale autorisée en translation et en rotation du chariot de manutention (1), du point de vue de la sécurité,
        b) une vitesse maximale que les entraînements (4) du chariot de manutention (1) peuvent atteindre,
        c) une accélération centripète maximale à laquelle peut être soumise une charge transportée par le chariot de manutention (1), et

    - déplacement du chariot de manutention (1) le long de l'autre courbe de trajectoire, en particulier au moyen d'un dispositif de régulation (8) du chariot de manutention (1), la trajectoire modélisée au moyen de splines comprenant plusieurs segments de splines (31-33) qui sont reliés par des points d'appui (35, 36), un changement d'orientation du chariot de manutention (1) étant effectué dans l'environnement d'au moins un des points d'appui (35, 36) pendant le déplacement du chariot de manutention (1), **caractérisé en ce que**, pour le changement d'orientation du chariot de manutention (1), un point de départ de rotation ($r^s_i$) est fixé sur un segment de spline précédant le point d'appui pertinent et un point final de rotation ($r^e_i$) est fixé sur un segment de spline suivant le point d'appui pertinent.

2. Procédé selon la revendication 1, dans lequel la règle d'optimisation comprend une modification de la forme de l'autre courbe de trajectoire et/ou une vérification de l'absence de collision avec un obstacle (7), et/ou est basée sur une fonction de coût, en particulier du temps et/ou de l'énergie à consacrer pour le déplacement du véhicule au sol (1).

3. Procédé selon la revendication 1 ou 2, dans lequel un déplacement du chariot de manutention (1) sans changement d'orientation est associé à chacun des segments de spline et un changement d'orientation du chariot de manutention (1) est associé aux points d'appui.

4. Procédé selon la revendication 1 ou 2, dans lequel le changement d'orientation est effectué de manière régulière.

5. Chariot de manutention holonome, présentant un corps de base de véhicule (2), plusieurs roues (3) qui sont en particulier réalisées sous forme de roues omnidirectionnelles, des entraînements (4) pour faire mouvoir les roues (3) et un dispositif de commande (5) relié aux entraînements (4), qui est configuré pour faire fonctionner les entraînements (4) pour un déplacement du chariot de manutention (1) conformément au procédé selon l'une des revendications 1 à 4.

FIG. 1

FIG. 3

```
        ┌──────────────┐
        │   Ermitteln  │
  ┌────▶│  eines Pfades│
  │     └──────────────┘
  │            │
  │            ▼
  │     ┌──────────────┐
  │     │   Ermitteln  │
  │     │ einer Bahnkurve│
  │     └──────────────┘
  │            │
  │            ▼
┌──────────┐  ┌──────────────┐
│  Karte   │─▶│  Optimierung │ ⟲
└──────────┘  └──────────────┘
                     │
                     ▼
              ┌──────────────┐
              │    weitere   │
              │   Bahnkurve  │
              └──────────────┘
                     │
                     ▼
┌──────────┐  ┌──────────────────────┐
│Odometrie │─▶│ Regelvorrichtung des │
└──────────┘  │  Flurförderfahrzeugs │
              └──────────────────────┘
```

# FIG. 2

FIG. 4

FIG. 5

FIG. 6

FIG. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0346538 A1

**In der Beschreibung aufgeführte Nicht-Patentliteratur**

- **LAU B. ; SPUNK C. et al.** *Kinodynamic Motion Planning for Mobile Robots Using Splines beschreibt ein Verfahren zur Planung der Bewegung eines mobilen Roboters in einer Umgebung mit Hindernissen*

- **PAROMTCHIK, I.E. ; REMBOLD, U.** *A Practical Approach to Motion Generation and Control for an Omnidirectional Mobile Robot beschreibt ein Verfahren zur Erzeugung einer Bahnkurve aus einem Pfad*